# EUROPÄISCHE PATENTSCHRIFT

(11) **EP 3 036 126 B1**
(45) Veröffentlichungstag und Bekanntmachung des Hinweises auf die Patenterteilung: **15.07.2020**
(21) Anmeldenummer: 13753154.7
(22) Anmeldetag: 20.08.2013
(51) Int. Cl.: B60K 37/06, B60K 35/00, G06F 3/0482, G06F 3/0488

(54) **BEDIENVERFAHREN FÜR EINE BEDIEN- UND ANZEIGEVORRICHTUNG IN EINEM FAHRZEUG UND BEDIEN- UND ANZEIGEVORRICHTUNG IN EINEM FAHRZEUG**
METHOD OF OPERATING AN INPUT AND DISPLAY DEVICE IN A VEHICLE AND INPUT AND DISPLAY DEVICE IN A VEHICLE
PROCÉDÉ POUR OPÉRER UN DISPOSITIF D'OPÉRATION ET D'AFFICHAGE DANS UN VÉHICULE ET DISPOSITIF D'OPÉRATION ET D'AFFICHAGE DANS UN VÉHICULE

(43) Veröffentlichungstag der Anmeldung: 29.06.2016
(73) Patentinhaber: Volkswagen Aktiengesellschaft, 38440 Wolfsburg (DE)
(72) Erfinder: JUN, Mi-Ran, 12059 Berlin (DE)
(86) Internationale Anmeldenummer: PCT/EP2013/067289
(87) Internationale Veröffentlichungsnummer: WO 2015/024589

(56) Entgegenhaltungen:
- EP-A1- 1 935 704
- WO-A2-2009/143076
- DE-A1-102008 052 485
- DE-A1-102009 059 866
- DE-C1- 3 514 438
- VOLKER ZOTA ET AL: "Flexibler, mobiler, schneller - Hardware für Windows 8", C'T, Bd. 2012, Nr. 23, 22. Oktober 2012 (2012-10-22), Seiten 82-91, XP055119422, ISSN: 0724-8679

## Beschreibung

Die vorliegende Erfindung betrifft ein Bedienverfahren in einem Fahrzeug, bei dem auf einer in dem Fahrzeug angeordneten Anzeigefläche ein Menü einer Bedienstruktur angezeigt wird. Dabei umfasst die Bedienstruktur ein Hauptmenü und eine Vielzahl von weiteren Menüs. Ferner sind Eingaben erfassbar, durch welche eine Veränderung des angezeigten Menüs herbeiführbar ist und durch welche Schaltelemente der Menüs betätigbar sind. Des Weiteren betrifft die Erfindung eine Bedienvorrichtung in einem Fahrzeug mit einer Anzeigefläche und einem Speicher, in dem Daten zu einer Bedienstruktur gespeichert sind, die ein Hauptmenü und eine Vielzahl von weiteren Menüs umfasst. Ferner weist die Bedienvorrichtung eine Steuervorrichtung auf, die mit dem Speicher und der Anzeigefläche gekoppelt ist und mittels welcher Graphikdaten zur Anzeige der Menüs auf der Anzeigefläche erzeugbar sind. Des Weiteren umfasst die Bedienvorrichtung eine Eingabevorrichtung, mit der Eingaben erfassbar sind, durch welche eine Veränderung des angezeigten Menüs herbeiführbar ist und durch welche Schaltelemente der Menüs betätigbar sind.

In einem Fahrzeug gibt es verschiedene Informations- und Kommunikationseinrichtungen, deren Anzeigen und Informationen dargestellt werden müssen. Die Größe der Anzeigeflächen, welche in dem Fahrzeug untergebracht werden können, so dass insbesondere der Fahrer des Fahrzeugs die Anzeigen ablesen kann ist, ist sehr begrenzt. Um daher die vielfältigen Bedien- und Anzeigemöglichkeiten übersichtlich darzustellen, werden z. B. hierarchische Bedienstrukturen verwendet. Eine hierarchische Bedienstruktur enthält eine Vielzahl von Menüs, denen jeweils verschiedene Menüpunkte, alphanumerische Informationsdarstellungen und/oder Graphiken zugeordnet sind. Bei der Auswahl eines Menüpunkts öffnet sich ein Menü einer tieferen Ebene der hierarchischen Bedienstruktur, ein sogenanntes Untermenü. Dieses Untermenü umfasst wiederum mehrere Untermenüpunkte. Diese Struktur kann über mehrere Hierarchieebenen fortgeführt werden, so dass sich eine komplexe Verästelung für die Anzeige auf der Anzeigefläche ergibt. Trotz der Komplexität der Bedienstruktur, soll der Nutzer die Bedienvorrichtung in dem Fahrzeug einfach und intuitiv bedienen können.

Um die vielfältigen Informationen der Bedienvorrichtung flexibel anzeigen zu können, werden vielfach frei programmierbare Displays eingesetzt, welche die Menüs der Bedienstruktur auf einer Anzeigefläche anzeigen. In der EP 2 246 214 A1 ist beispielsweise ein Bedienverfahren beschrieben, bei dem ein Hauptmenü, welches mehrere Menüpunkte umfasst, auf der Anzeigefläche angezeigt wird. Wird einer der Menüpunkte betätigt, wird ein Untermenü angezeigt, welches wiederum mehrere Menüpunkte umfasst.

In der WO 2013/053466 A2 wird ein Verfahren zum Bereitstellen einer Bedienvorrichtung in einem Fahrzeug beschrieben, bei dem auf der Anzeigefläche ein Hauptmenü einer hierarchischen Bedienstruktur angezeigt wird. In diesem Fall umfasst das Hauptmenü eine größere Menge an Menüpunkten, sodass nur eine Teilmenge auf der Anzeigefläche angezeigt werden kann. Der Nutzer kann in diesem Fall durch einen Bedienvorgang die angezeigte Teilmenge verändern.

Die DE 10 2008 052 485 A1 beschreibt ein Verfahren, bei dem verschiedene Anzeigeinhalte ausgewählt werden können. Dazu werden grafische Objekte, die den Anzeigeinhalten zugeordnet sind, entlang eines Rings angeordnet angezeigt und durch Auswahl eines der grafischen Objekte wird der entsprechende Anzeigeinhalt angezeigt. Dabei wird ferner eine Schaltfläche angezeigt, durch deren Betätigung zur Auswahlansicht anhand der ringförmig angeordneten Objekte zurückgekehrt werden kann.

Es ist ferner bekannt, bei der Bedienung eines Tablet-Computers durch eine Wischgeste vom rechten Rand des Displays nach links ein Hauptmenü aufzurufen.

Bei dem in der WO 2009/143076 A2 vorgeschlagenen Verfahren zum Steuern einer Rechenvorrichtung nehmen verschiedene Aktivitäten, etwa einzelne Programme, jeweils eine bestimmte Fläche ein, die als "Karte" repräsentiert wird. Die Karten können auf dem Bildschirm verschoben und manipuliert werden. Dabei kann eine Karte durch Verschieben in den Fokus gebracht werden, um die zugehörige Aktivität zu bedienen. Es kann ein Wechsel zwischen Ansichten der Karten im Vollbildmodus und im Kartenmodus durchgeführt werden, etwa anhand einer Wischgeste.

Der vorliegenden Erfindung liegt die Aufgabe zugrunde, ein Bedienverfahren und eine Bedienvorrichtung der eingangs genannten Art bereitzustellen, welche eine erleichterte Bedienung für den Nutzer bereitstellen.

Erfindungsgemäß wird diese Aufgabe durch ein Bedienverfahren mit den Merkmalen des Anspruchs 1 und eine Bedienvorrichtung mit den Merkmalen des Anspruchs 6 gelöst. Vorteilhafte Ausgestaltungen und Weiterbildungen ergeben sich aus den abhängigen Ansprüchen.

Das erfindungsgemäße Bedienverfahren ist dadurch gekennzeichnet, dass bei zumindest mehreren Menüs der Vielzahl von Menüs der Bedienstruktur ein Sonderschaltelement am Rand der Anzeigefläche angezeigt wird, die durch eine Wischgeste betätigbar ist. Wenn die dem Sonderschaltelement zugeordnete Wischgeste erfasst wurde, wird das Hauptmenü angezeigt.

Dabei wird, nachdem die Betätigung des Sonderschaltelements erfasst wurde, das Hauptmenü bei der Anzeige auf der Anzeigefläche von dem Rand, bei dem das Sonderschaltelement angezeigt wird, innerhalb eines ersten Zeitintervalls in die Anzeige hinein bewegt, so dass das Hauptmenü mit zunehmender Zeit einen größer werdenden Bereich der Anzeigefläche einnimmt und gleichzeitig das bisher angezeigte Menü mit zunehmender Zeit verschwindet. Dabei wird das vor dem Hauptmenü angezeigte Menü wieder angezeigt, wenn innerhalb eines zweiten Zeitintervalls keine Eingabe eines Schaltelements des Hauptmenüs erfasst worden ist.

Bei dem erfindungsgemäßen Verfahren ist es für den Nutzer auf einfache und intuitive Weise möglich, schnell und einfach zum Hauptmenü zu gelangen, selbst wenn die Bedienstruktur sehr komplex ist. Unabhängig davon, wo sich der Nutzer in der Bedienstruktur befindet, kann er durch eine einfache Wischgeste das Sonderschaltelement betätigen, um schnell wieder zurück zum Hauptmenü zu gelangen.

Unter einem *Schaltelement* bzw. einem *Sonderschaltelement* wird im Sinne der Erfindung ein Steuerelement einer graphischen Benutzerschnittstelle verstanden. Ein Schaltelement unterscheidet sich von Elementen und Flächen zur reinen Informationsanzeige, so genannten Anzeigeelementen, darin, dass sie auswählbar sind. Bei einer Auswahl eines Schaltelements wird eine ihr zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt wird. Die Schaltelemente können somit herkömmliche mechanische Schalter ersetzen. Die Schaltelemente können beliebig für eine frei programmierbaren Anzeigefläche erzeugt und von dieser angezeigt werden. Des Weiteren kann vorgesehen sein, dass ein Schaltelement markiert werden kann. In diesem Fall wird die zugeordnete Funktion noch nicht ausgeführt. Das markierte Schaltelement wird jedoch gegenüber anderen Schaltelementen hervorgehoben dargestellt. Erst bei einer Auswahl des Schaltelements wird die ihr zugeordnete Funktion ausgeführt.

Gemäß einer Weiterbildung des erfindungsgemäßen Verfahrens ist die Bedienstruktur eine hierarchische Bedienstruktur, bei der das Hauptmenü in der hierarchisch höchsten Ebene angeordnet ist. Das Hauptmenü kann somit mehrere Menüeinträge umfassen, bei deren Betätigung ein Menü einer hierarchisch weiter unten angeordneten Ebene aufgerufen wird. Diese hierarchische Bedienstruktur kann sich über mehrere Hierarchieebenen erstrecken. Gerade bei einer solchen Bedienstruktur ist es für den Nutzer unter Umständen schwierig sich zu orientieren. Bei einem Einsatz der Bedienstruktur in einem Fahrzeug wird die Orientierung zusätzlich dadurch erschwert, dass bei einer Bedienung durch den Fahrer des Fahrzeugs, dieser nicht vom Fahrgeschehen abgelenkt werden darf, wenn er Einrichtungen des Fahrzeugs bedient. In diesem Fall ist es bei dem erfindungsgemäßen Verfahren möglich, dass insbesondere der Fahrer des Fahrzeugs mittels des Sonderschaltelements und der Wischgeste einfach und intuitiv wieder zum Hauptmenü gelangen kann.

Gemäß einer Ausgestaltung des erfindungsgemäßen Verfahrens wird bei allen Menüs der Bedienstruktur außer dem Hauptmenü das Sonderschaltelement am Rand der Anzeigefläche angezeigt. Der Nutzer kann auf diese Weise bei allen Menüs durch die Wischgeste, die dem Sonderschaltelement zugeordnet ist, einfach und schnell wieder zurück zum Hauptmenü gelangen.

Gemäß einer Weiterbildung des erfindungsgemäßen Verfahrens wird das Sonderschaltelement bei allen Menüs der Bedienstruktur außer dem Hauptmenü bei derselben Position angezeigt. Hierdurch wird erreicht, dass der Nutzer das Sonderschaltelement bei jedem Menü einfach und intuitiv wiedererkennt. Hierdurch wird die Orientierung in den einzelnen Menüs vereinfacht.

Gemäß einer weiteren Ausgestaltung des erfindungsgemäßen Bedienverfahrens wird das Sonderschaltelement bei allen Darstellungen, außer der Darstellung des Hauptmenüs auf der Anzeigefläche angezeigt. In diesem Fall kann das Hauptmenü nicht nur bei der Anzeige von Menüs sondern auch bei einfachen Informationsdarstellungen einfach und intuitiv durch die Wischgeste zur Anzeige gebracht werden.

Bei dem Sonderschaltelement handelt es sich insbesondere um einen Balken, der auf der Anzeigefläche dargestellt wird. Dabei ist die Längskante des Balkens am Rand der Anzeigefläche angeordnet. Das Sonderschaltelement ist insbesondere am oberen Rand der Anzeigfläche angeordnet.

Bei dem erfindungsgemäßen Verfahren wird, nachdem die Betätigung des Sonderschaltelements erfasst wurde, das Hauptmenü bei der Anzeige auf der Anzeigefläche von dem Rand, bei dem das Sonderschaltelement angezeigt wird, innerhalb eines ersten Zeitintervalls in die Anzeige hinein bewegt, so dass das Hauptmenü mit zunehmender Zeit einen größer werdenden Bereich der Anzeigefläche einnimmt und gleichzeitig das bisher angezeigte Menü mit zunehmender Zeit verschwindet. Nach Ablauf des ersten Zeitintervalls wird dann nur noch das Hauptmenü angezeigt. Der Nutzer kann auf diese Weise den Menüwechsel besonders einfach erfassen, wodurch wiederum die Orientierung in der Bedienstruktur erleichtert wird.

Wenn bei dem erfindungsgemäßen Verfahren innerhalb eines zweiten Zeitintervalls keine Eingabe eines Schaltelements des Hauptmenüs erfasst worden ist, wird das vor dem Hauptmenü angezeigte Menü wieder angezeigt. Hierdurch ist es möglich, dass der Nutzer ohne weiteren Bedienvorgang automatisch wieder zurück zu dem letzten Menü gelangt, wenn er kein Schaltelement des Hauptmenüs betätigen will.

Bei dem erfindungsgemäßen Verfahren kann die Wischgeste beispielsweise auf einer berührungsempfindlichen Oberfläche der Anzeigefläche ausgeführt werden. Alternativ oder zusätzlich kann die Wischgeste in einen Detektionsraum vor der Anzeigefläche ausgeführt werden.

Die erfindungsgemäße Bedienvorrichtung ist dadurch gekennzeichnet, dass mittels der Steuervorrichtung die Graphikdaten für die Darstellung der Menüs der Bedienstruktur so erzeugbar sind, dass bei zumindest mehreren Menüs der Bedienstruktur ein Sonderschaltelement am Rand der Anzeigefläche angezeigt wird, das durch eine Wischgeste betätigbar ist. Wenn mittels der Eingabevorrichtung die dem Sonderschaltelement zugeordnete Wischgeste erfasst wurde, sind mittels der Steuervorrichtung die Graphikdaten für die Darstellung der Menüs der Bedienstruktur so erzeugbar, dass das Hauptmenü angezeigt wird. Dabei ist, nachdem die Betätigung des Sonderschaltelements erfasst wurde, das Hauptmenü bei der Anzeige auf der Anzeigefläche von dem Rand, bei dem das Sonderschaltelement anzeigbar ist, innerhalb eines ersten Zeitintervalls in die Anzeige hinein bewegbar, so dass das Hauptmenü mit zunehmender Zeit einen größer werdenden Bereich der Anzeigefläche einnimmt und gleichzeitig das bisher angezeigte Menü mit zunehmender Zeit verschwindet. Das vor dem Hauptmenü angezeigte Menü ist wieder anzeigbar, wenn innerhalb eines zweiten Zeitintervalls keine Eingabe eines Schaltelements des Hauptmenüs erfasst worden ist.

Die erfindungsgemäße Bedienvorrichtung ist insbesondere so ausgebildet, dass sie die vorstehend genannten Verfahrensschritte teilweise oder vollständig ausführen kann. Mittels der Bedienvorrichtung können verschiedene Einrichtungen des Fahrzeugs bedient werden. Die erfindungsgemäße Bedienvorrichtung weist dieselben vorstehend genannten Vorteile wie das erfindungsgemäße Verfahren auf.

Gemäß einer Ausgestaltung der erfindungsgemäßen Bedienvorrichtung umfasst die Eingabevorrichtung eine berührungsempfindliche Oberfläche, die auf der Anzeigefläche angeordnet ist und auf welcher die Wischgeste erfassbar ist. Alternativ oder zusätzlich umfasst die Eingabevorrichtung eine Erfassungseinrichtung, mit welcher eine in einem Detektionsbereich ausgeführte Geste erfassbar ist, wobei der Detektionsbereich insbesondere vor der Anzeigefläche angeordnet ist.

Des Weiteren betrifft die Erfindung ein Fahrzeug, insbesondere ein Kraftfahrzeug, welches die erfindungsgemäße Bedienvorrichtung aufweist.

Im Folgenden wird ein Ausführungsbeispiel des erfindungsgemäßen Bedienverfahrens und der erfindungsgemäßen Bedienvorrichtung mit Bezug zu den Zeichnungen erläutert.
- Figur 1: zeigt schematisch ein Ausführungsbeispiel der erfindungsgemäßen Bedienvorrichtung und die Verbindung dieser Bedienvorrichtung mit anderen Einrichtungen des Fahrzeugs,
- Figur 2: zeigt eine Schnittansicht der Anzeigevorrichtung des Ausführungsbeispiels der erfindungsgemäßen Bedienvorrichtung,
- Figur 3: zeigt ein Fahrzeug mit dem Ausführungsbeispiel der erfindungsgemäßen Bedienvorrichtung und
- die Figuren 4 bis 10: zeigen schematisch Anzeigen auf der Anzeigefläche der erfindungsgemäßen Bedienvorrichtung, die von einem Ausführungsbeispiel des erfindungsgemäßen Verfahrens erzeugt wurden.

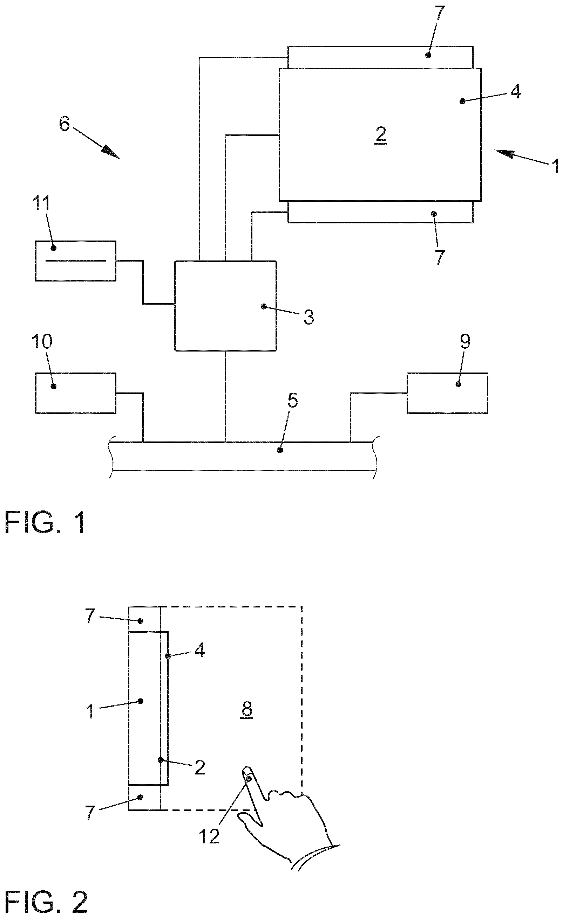

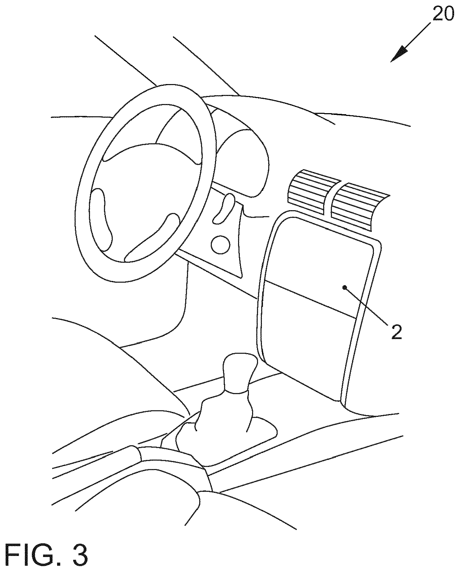

Mit Bezug zu den Figuren 1 bis 3 wird zunächst ein Ausführungsbeispiel der erfindungsgemäßen Bedienvorrichtung 6 und dessen Anordnung in einem Fahrzeug 20 erläutert:
Die Bedienvorrichtung 6 umfasst eine Anzeigevorrichtung 1 mit einer Anzeigefläche 2, die so im Innenraum des Fahrzeugs 20 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Bedienvorrichtung 6 umfasst ferner eine Steuervorrichtung 3 und eine Eingabevorrichtung. Die Steuervorrichtung 3 ist mit der Anzeigevorrichtung 1 verbunden. Mit der Steuervorrichtung 3 sind Graphikdaten zur Informationsdarstellung auf der Anzeigefläche 2 erzeugbar. Die Eingabevorrichtung umfasst eine berührungsempfindliche Oberfläche 4 auf der Anzeigefläche 2. Es wird somit ein sogenannter Touchscreen bereitgestellt.

Des Weiteren kann die Eingabevorrichtung optional eine Erfassungseinrichtung 7 umfassen. Mit der Erfassungseinrichtung 7 kann der Aufenthalt und die Position eines Betätigungsobjekts 12 in einem Detektionsbereich 8 erfasst werden. Außerdem kann die zeitliche Entwicklung der Position und gegebenenfalls der Form des Betätigungsobjekts 12 in den Detektionsbereich 8 erfasst werden, so dass verschiedene Gesten für Eingaben erfasst werden können. Der Detektionsbereich 8 ist in Fig. 2 im Detail dargestellt. Der Detektionsbereich 8 ist so gebildet, dass eine Geste, die vor der Anzeigefläche 2 ausgeführt wird, erfasst werden kann.

Bei dem Betätigungsobjekt 12 kann es sich insbesondere um die Fingerspitze eines Nutzers oder die Hand eines Nutzers handeln. Auf diese Weise sind Wischgesten eines Nutzers erfassbar. Bei einer Wischgeste bewegt der Nutzer seine Fingerspitzen schnell in eine Richtung. Auch diese Richtung der Wischgeste wird von der Erfassungseinrichtung 7 erfasst und an die Steuervorrichtung 3 übertragen. Die Steuervorrichtung 3 kann in Abhängigkeit von den verschiedenen Eingaben auf der berührungsempfindlichen Oberfläche 4 oder die Eingaben, welche mit der Erfassungseinrichtung 7 erfasst worden sind, die Anzeige auf der Anzeigefläche 2 verändern.

Die Steuervorrichtung 3 ist des Weiteren mit einem Speicher 11 verbunden. In dem Speicher 11 sind Daten zu einer hierarchischen Bedienstruktur gespeichert, die in verschiedenen Ebenen Menüs aufweist. Die hierarchische Bedienstruktur weist ein Hauptmenü auf, welches beim Einschalten der Bedienvorrichtung 6 bzw. beim Einschalten des Fahrzeugs 20 angezeigt wird. Dieses Hauptmenü umfasst mehrere Menüpunkte. Die Menüpunkte sind als Schaltelemente auf der Anzeigefläche 2 ausgebildet. Wird ein solches Schaltelement bestätigt, wird anschließend ein Untermenü, das heißt ein Menü einer hierarchisch niedrigeren Ebene angezeigt, welches jeweils wieder mehrere Menüpunkte umfassen kann. Ferner können in den Menüs oder nach der Betätigung eines Menüpunktes Informationen angezeigt werden, welche der Bedienung von Einrichtungen des Fahrzeugs 20 dienen oder welche Zustände von Einrichtungen des Fahrzeugs 20 anzeigen.

Um diese Anzeigen innerhalb der hierarchischen Bedienstruktur zu erzeugen, ist die Steuervorrichtung 3 außerdem mit einem Datenbus 5 des Fahrzeugs 20 gekoppelt. Über diesen Datenbus 5 ist die Steuervorrichtung 3 mit weiteren Einrichtungen 9, 10 des Fahrzeugs 20 verbunden, zu denen Informationen auf der Anzeigefläche 2 angezeigt werden sollen oder die mittels der Bedienvorrichtung 6 bedient werden sollen. Bei den Einrichtungen 9 und 10 kann es sich beispielsweise um ein Navigationssystem des Fahrzeugs 20 und ein Radio des Fahrzeugs 20 handeln.

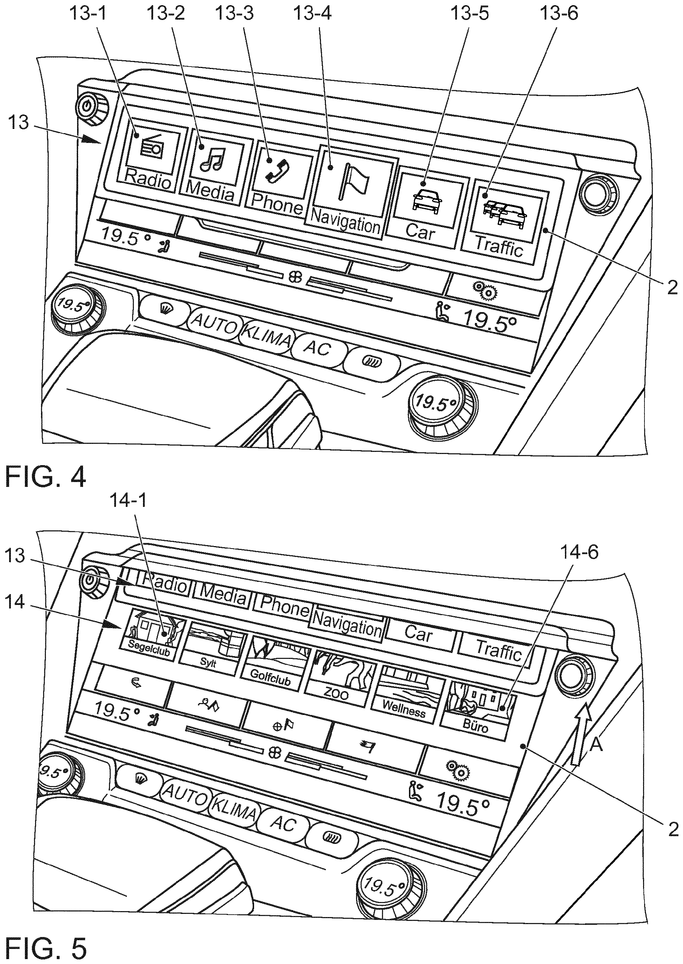

Im Folgenden wird ein Ausführungsbeispiel des erfindungsgemäßen Verfahrens, welches von der vorstehend beschriebenen Bedienvorrichtung 6 ausführbar ist, erläutert:
Wenn das Fahrzeug 20 eingeschaltet wird, das heißt zum Beispiel die Zündung betätigt wird, wird auf der Anzeigefläche 2 ein Hauptmenü 13 angezeigt, wie es in Fig. 4 gezeigt ist. Das Hauptmenü 13 umfasst mehrere Menüpunkte, zu denen die Schaltelemente 13-1 bis 13-6 angezeigt werden. Der Nutzer kann diese Schaltelemente 13-1 bis 13-6 betätigen, indem er mit seiner Fingerspitze 12 die berührungsempfindliche Oberfläche 4 im Bereich des jeweiligen Schaltelements berührt. Die Betätigung eines Schaltelements wird dann dadurch visualisiert, dass die Steuervorrichtung 3 die Anzeige auf der Anzeigefläche 2 so verändert, dass das betätigte Schaltelement hervorgehoben dargestellt wird, zum Beispiel vergrößert oder perspektivisch im Vordergrund, wie dies in Fig. 4 für das Schaltelement 13-4 "Navigation" gezeigt ist.

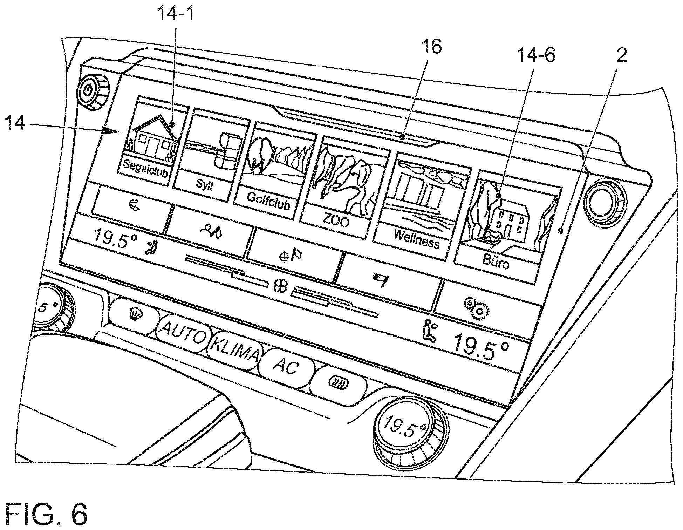

Nach Betätigung eines Schaltelements des Hauptmenüs 13 erzeugt die Steuervorrichtung 3 auf der Anzeigefläche 2 eine Animation. Eine solche Animation ist in Fig. 5 dargestellt. Das Hauptmenü 13 wird in Richtung des Pfeils A nach oben geschoben. Das heißt, der Bereich, den das Hauptmenü 13 auf der Anzeigefläche 2 einnimmt, wird innerhalb eines ersten Zeitintervalls immer kleiner, bis nach Ablauf des ersten Zeitintervalls das Hauptmenü 13 nicht mehr dargestellt wird. Gleichzeitig erscheint ein Menü 14, welches dem betätigen Schaltelement 13-4 zugeordnet ist. Im hier beschriebenen Fall ist dies ein Navigationsmenü 14, wie es in Fig. 6 dargestellt ist.

Das Navigationsmenü 14 umfasst wiederum mehrere Menüpunkte, zu denen Schaltelemente 14-1 bis 14-6 angezeigt werden. Im vorliegenden Fall sind dies Kategorien von Zielen für das Navigationssystem. Des Weiteren wird ein Sonderschaltelement 16 angezeigt, über welches der Nutzer immer wieder zurück zum Hauptmenü 13 gelangen kann. Die Funktion und die Betätigung des Sonderschaltelements 16 wird später im Detail erläutert.

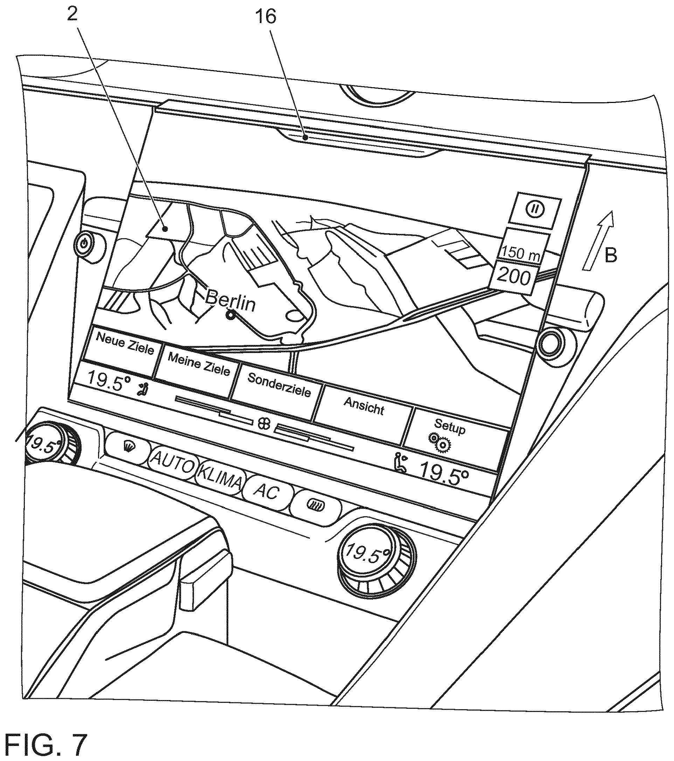

Wenn der Nutzer das Navigationssystem auf an sich bekannte Weise so betätigt, dass er eine geographische Karte sehen will, steuert die Steuervorrichtung 3 die Anzeigevorrichtung 1 so an, dass das Display weiter nach oben herausgefahren wird. Dies ist in Fig. 7 dargestellt. Das Display der Anzeigevorrichtung 1 wird in Richtung des Pfeils B nach oben gefahren. Gleichzeitig wird eine geographische Karte auf der Anzeigefläche 2 angezeigt. Ferner wird erneut das Sonderschaltelement 16 angezeigt.

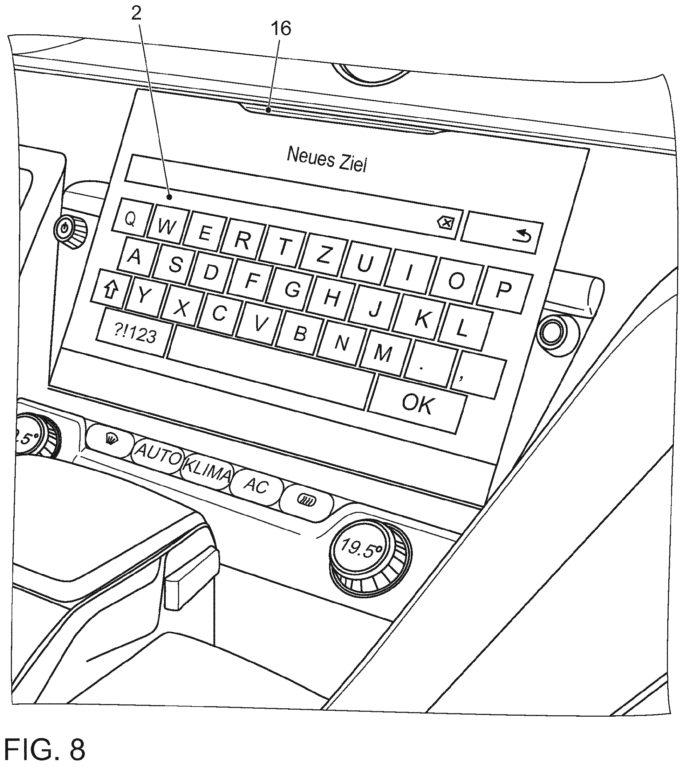

Wenn der Nutzer bei dem Navigationssystem ein neues Ziel eingeben will, kann er durch entsprechende Eingaben die in Fig. 8 gezeigte Anzeige auf der Anzeigefläche 2 hervorrufen. Es erscheint eine Tastatur für die Eingabe eines neuen Ziels. Ferner wird erneut das Sonderschaltelement 16 dargestellt.

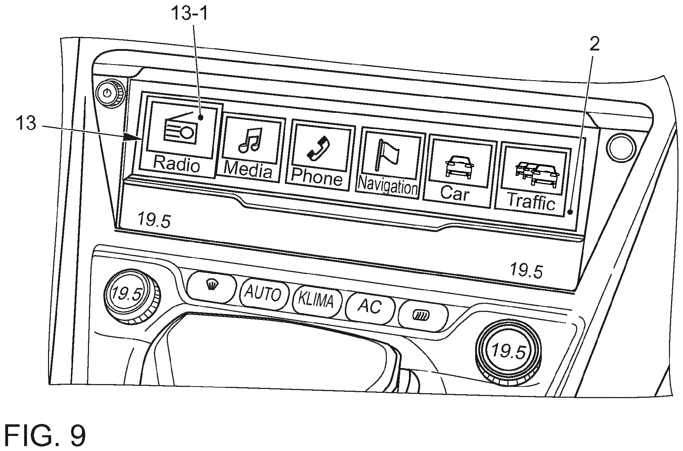

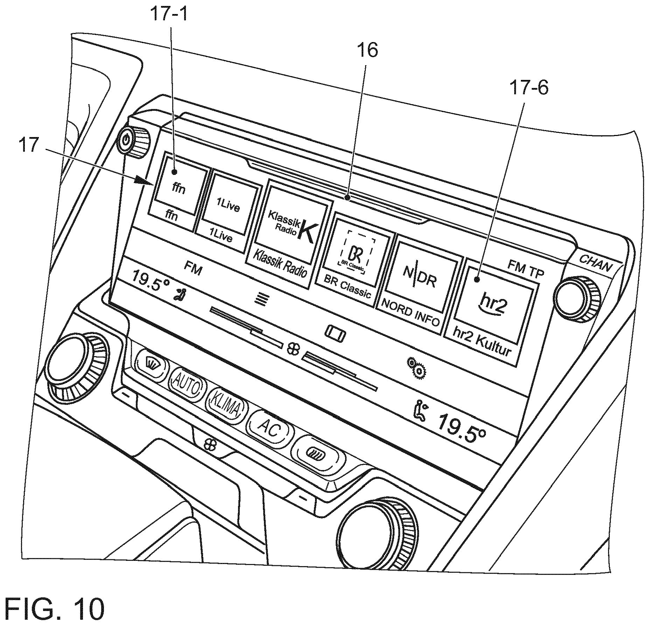

Ausgehend vom Hauptmenü 13 kann der Nutzer auch andere Einrichtungen des Fahrzeugs 20 bedienen. In Fig. 9 ist der Fall dargestellt, bei dem der Nutzer das Schaltelement 13-1 für das Radio des Fahrzeugs 20 betätigt hat. Nach der Betätigung dieses Schaltelements 13-1 erscheint die in Fig. 10 gezeigte Darstellung eines Menüs 17 für das Radio. Erneut werden mehrere Schaltelemente 17-1 bis 17-6 dargestellt, welche in diesem Fall verschiedenen Sendern des Radios zugeordnet sind. Des Weiteren wird das Sonderschaltelement 16 angezeigt.

Im Folgenden wird die Funktion, die Anordnung und die Betätigung des Sonderschaltelements 16 im Detail erläutert:
Das Sonderschaltelement 16 besitzt die Form eines länglichen Balkens, der mit seiner Längsseite am Rand, insbesondere am oberen Rand der Anzeigefläche 2 angeordnet ist. Außer beim Hauptmenü 13 wird das Sonderschaltelement 16 bei allen anderen Menüs und Informationsdarstellungen auf der Anzeigefläche 2 bei dieser Position auf der Anzeigefläche 2 angezeigt.

Das Sonderschaltelement 16 kann durch eine Wischgeste betätigt werden. Diese Wischgeste kann auf der berührungsempfindlichen Oberfläche 4 oder im Detektionsbereich 8 ausgeführt werden. Der Nutzer streicht entweder auf der berührungsempfindlichen Oberfläche 4 ausgehend von dem Bereich, bei dem das Sonderschaltelement dargestellt wird, nach unten oder er führt eine Wischgeste in dem Detektionsbereich 8 aus, bei der die Fingerspitzen einer Hand rasch von oben nach unten bewegt werden. Wenn mittels der Eingabevorrichtung und der Steuervorrichtung 3 eine solche Wischgeste erfasst worden ist, erzeugt die Steuervorrichtung 3 eine Animation, bei welcher das Hauptmenü 13 von dem Rand der Anzeigefläche 2, bei dem das Sonderschaltelement 16 angezeigt wird, das heißt im vorliegenden Fall ausgehend vom oberen Rand der Anzeigefläche 2, innerhalb des ersten Zeitintervalls in die Anzeige hinein bewegt wird, so dass das Hauptmenü 13 mit zunehmender Zeit einen größer werdenden Bereich der Anzeigefläche 2 einnimmt. Gleichzeitig verschwindet das bisher angezeigte Menü, zum Beispiel das Menü 17, mit zunehmender Zeit. Bildlich gesprochen wird das Hauptmenü 13 über das bisher angezeigte Menü geschoben, bis dieses nicht mehr angezeigt wird. Nach Ablauf des ersten Zeitintervalls wird nur noch das Hauptmenü 13 angezeigt.

Wenn nach einer solchen Betätigung des Sonderschaltelements 16 innerhalb eines zweiten Zeitintervalls keine Eingabe eines der Schaltelemente 13-1 bis 13-6 des Hauptmenüs 13 erfasst wird, verschwindet das Hauptmenü 13 wieder mittels einer Animation, wie sie mit Bezug zu Fig. 5 erläutert wurde, und das vor der Betätigung des Sonderschaltelements 16 angezeigte Menü, das heißt zum Beispiel das Menü 17, wird wieder angezeigt.

### BEZUGSZEICHENLISTE

- 1: Anzeigevorrichtung
- 2: Anzeigefläche
- 3: Steuervorrichtung
- 4: berührungsempfindliche Oberfläche, Eingabevorrichtung
- 5: Datenbus
- 6: Bedienvorrichtung
- 7: Erfassungseinrichtung
- 8: Detektionsbereich
- 9: Einrichtung des Fahrzeugs
- 10: Einrichtung des Fahrzeugs
- 11: Speicher
- 12: Betätigungsobjekt, Fingerspitze, Hand des Nutzers
- 13: Hauptmenü
- 13-1 bis 13-6: Schaltelement
- 14: Menü
- 14-1 bis 14-6: Schaltelemente
- 16: Sonderschaltelemente
- 17: Menü
- 17-1 bis 17-6: Schaltelemente
- 20: Fahrzeug

## Patentansprüche

1. Bedienverfahren in einem Fahrzeug (20), bei dem
- auf einer in dem Fahrzeug (20) angeordneten Anzeigefläche (2) ein Menü (13, 14, 17) einer Bedienstruktur angezeigt wird,
- wobei die Bedienstruktur ein Hauptmenü (13) und eine Vielzahl von weiteren Menüs (14, 17) umfasst und
- wobei Eingaben erfassbar sind, durch welche eine Veränderung des angezeigten Menüs (13, 14, 17) herbeiführbar ist und durch welche Schaltelemente (13-1 bis 13-6, 14-1 bis 14-6, 17-1 bis 17-6) der Menüs (13, 14, 17) betätigbar sind,
**dadurch gekennzeichnet, dass**
- bei zumindest mehreren Menüs (14, 17) der Vielzahl von Menüs (13, 14, 17) der Bedienstruktur ein Sonderschaltelement (16) am Rand der Anzeigefläche (2) angezeigt wird, das durch eine Wischgeste betätigbar ist, und,
- wenn die dem Sonderschaltelement (16) zugeordnete Wischgeste erfasst wurde, das Hauptmenü (13) angezeigt wird, wobei,
- nachdem die Betätigung des Sonderschaltelements (16) erfasst wurde, das Hauptmenü (13) bei der Anzeige auf der Anzeigefläche (2) von dem Rand, bei dem das Sonderschaltelement (16) angezeigt wird, innerhalb eines ersten Zeitintervalls in die Anzeige hinein bewegt wird, so dass das Hauptmenü (13) mit zunehmender Zeit einen größer werdenden Bereich der Anzeigefläche (2) einnimmt und gleichzeitig das bisher angezeigte Menü (14, 17) mit zunehmender Zeit verschwindet, wobei
- das vor dem Hauptmenü (13) angezeigte Menü (14, 17) wieder angezeigt wird, wenn innerhalb eines zweiten Zeitintervalls keine Eingabe eines Schaltelements (13-1 bis 13-6) des Hauptmenüs 13 erfasst worden ist.

2. Bedienverfahren nach Anspruch 1,
**dadurch gekennzeichnet,**
**dass** die Bedienstruktur eine hierarchische Bedienstruktur ist, bei der das Hauptmenü (13) in der hierarchisch höchsten Ebene angeordnet ist.

3. Bedienverfahren nach Anspruch 1 oder 2,
**dadurch gekennzeichnet,**
**dass** bei allen Menüs (14, 17) der Bedienstruktur außer dem Hauptmenü (13) das Sonderschaltelement (16) am Rand der Anzeigefläche (2) angezeigt wird.

4. Bedienverfahren nach einem der vorhergehenden Ansprüche,
**dadurch gekennzeichnet,**
**dass** das Sonderschaltelement (16) bei allen Menüs (14, 17) außer dem Hauptmenü (13) bei derselben Position angezeigt wird.

5. Bedienverfahren nach einem der vorhergehenden Ansprüche,
**dadurch gekennzeichnet,**
**dass** das Sonderschaltelement (16) am oberen Rand der Anzeigefläche (2) angeordnet ist.

6. Bedienvorrichtung (6) in einem Fahrzeug (20) mit
- einer Anzeigefläche (2),
- einem Speicher (11), in dem Daten zu einer Bedienstruktur gespeichert sind, die ein Hauptmenü (13) und eine Vielzahl von weiteren Menüs (14, 17) umfasst,
- einer Steuervorrichtung (3), die mit dem Speicher (11) und der Anzeigefläche (2) gekoppelt ist und mittels welcher Graphikdaten zur Anzeige der Menüs (13, 14, 17) auf der Anzeigefläche (2) erzeugbar sind, und
- einer Eingabevorrichtung (4, 7), mit der Eingaben erfassbar sind, durch welche eine Veränderung des angezeigten Menüs (13, 14, 17) herbeiführbar ist und durch welche Schaltelemente (13-1 bis 13-6, 14-1 bis 14-6, 17-1 bis 17-6) der Menüs (13, 14, 17) betätigbar sind,
**dadurch gekennzeichnet, dass**
- mittels der Steuervorrichtung (3) die Graphikdaten für die Darstellung der Menüs (13, 14, 17) der Bedienstruktur so erzeugbar sind, dass bei zumindest mehreren Menüs (14, 17) der Vielzahl von Menüs (13, 14, 17) der Bedienstruktur ein Sonderschaltelement (16) am Rand der Anzeigefläche (2) angezeigt wird, das durch eine Wischgeste betätigbar ist, und,
- wenn mittels der Eingabevorrichtung (4, 7) die dem Sonderschaltelement (16) zugeordnete Wischgeste erfasst wurde, mittels der Steuervorrichtung (3) die Graphikdaten für die Darstellung der Menüs (13, 14, 17) so erzeugbar sind, dass das Hauptmenü (13) angezeigt wird, wobei,
- nachdem die Betätigung des Sonderschaltelements (16) erfasst wurde, das Hauptmenü (13) bei der Anzeige auf der Anzeigefläche (2) von dem Rand, bei dem das Sonderschaltelement (16) anzeigbar ist, innerhalb eines ersten Zeitintervalls in die Anzeige hinein bewegbar ist, so dass das Hauptmenü (13) mit zunehmender Zeit einen größer werdenden Bereich der Anzeigefläche (2) einnimmt und gleichzeitig das bisher angezeigte Menü (14, 17) mit zunehmender Zeit verschwindet, und
- das vor dem Hauptmenü (13) angezeigte Menü (14, 17) wieder anzeigbar ist, wenn innerhalb eines zweiten Zeitintervalls keine Eingabe eines Schaltelements (13-1 bis 13-6) des Hauptmenüs 13 erfasst worden ist.

7. Bedienvorrichtung (6) nach Anspruch 6,
**dadurch gekennzeichnet,**
**dass** die Eingabevorrichtung (4, 7) eine berührungsempfindliche Oberfläche (4) umfasst, die auf der Anzeigefläche (2) angeordnet ist und auf welcher die Wischgeste erfassbar ist.

8. Bedienvorrichtung (6) nach Anspruch 6 oder 7,
**dadurch gekennzeichnet,**
**dass** die Eingabevorrichtung (4, 7) eine Erfassungseinrichtung (7) umfasst, mit welcher eine in einem Detektionsbereich (8) ausgeführte Geste erfassbar ist, wobei der Detektionsbereich (8) vor der Anzeigefläche (2) angeordnet ist.

## Claims

1. Operating method in a vehicle (20), in which
- a menu (13, 14, 17) of an operating structure is displayed on a display surface (2) arranged in the vehicle (20),
- the operating structure comprising a main menu (13) and a plurality of further menus (14, 17), and
- wherein inputs can be detected via which a change of the displayed menu (13, 14, 17) can be brought about, and via which switching elements (13-1 to 13-6, 14-1 to 14-6, 17-1 to 17-6) of the menus (13, 14, 17) are operable,
**characterized in that**
- in at least several menus (14, 17) of the plurality of menus (13, 14, 17) of the operating structure, a special switching element (16) is displayed at the edge of the display surface (2) and can be operated by a swiping gesture, and,
- if the swiping gesture associated with the special switching element (16) has been detected, the main menu (13) is displayed, wherein,
- after the operation of the special switching element (16) has been detected, the main menu (13), if being displayed on the display surface (2), is moved within a first time interval into the display from the edge at which the special switching element (16) is displayed so that the main menu (13) takes up a region of the display surface (2) that becomes larger over time, and at the same time the previously displayed menu (14, 17) disappears overtime, wherein
- the menu (14, 17) displayed in front of the main menu (13) is displayed again if no input of a switching element (13-1 to 13-6) of the main menu 13 has been detected within a second time interval.

2. Operating method according to claim 1,
**characterized in that**
the operating structure is a hierarchical operating structure in which the main menu (13) is arranged at the highest hierarchical level.

3. Operating method according to Claim 1 or 2,
**characterized in that**
the special switching element (16) is displayed at the edge of the display surface (2) in all menus (14, 17) of the operating structure except for the main menu (13).

4. Operating method according to any one of the preceding claims,
**characterized in that**
the special switching element (16) is displayed at the same position in all menus (14, 17) except the main menu (13).

5. Operating method according to any one of the preceding claims,
**characterized in that**
the special switching element (16) is arranged at the upper edge of the display surface (2).

6. Operating device (6) in a vehicle (20), comprising
- a display surface (2),
- a memory (11) in which data are stored relating to an operating structure which comprises a main menu (13) and a plurality of further menus (14, 17),
- a control device (3) which is coupled to the memory (11) and the display surface (2) and by means of which graphic data for displaying the menus (13, 14, 17) on the display surface (2) can be generated, and
- an input device (4, 7) with which inputs can be detected via which a change of the displayed menu (13, 14, 17) can be brought about, and via which switching elements (13-1 to 13-6, 14-1 to 14-6, 17-1 to 17-6) of the menus (13, 14, 17) are operable,
**characterized in that**
- the graphic data for displaying the menus (13, 14, 17) of the operating structure can be generated by means of the control device (3) in such a way that, in at least several menus (14, 17) of the plurality of menus (13, 14, 17) of the operating structure, a special switching element (16) is displayed at the edge of the display surface (2) and can be operated by a swiping gesture, and,
- if the swiping gesture associated with the special switching element (16) has been detected by means of the input device (4, 7), the graphic data for displaying the menus (13, 14, 17) can be generated by means of the control device (3) in such a way that the main menu (13) is displayed, wherein,
- after the operation of the special switching element (16) has been detected, the main menu (13), if being displayed on the display surface (2), is movable within a first time interval into the display from the edge at which the special switching element (16) is displayable so that the main menu (13) takes up a region of the display surface (2) that becomes larger over time and, at the same time, the previously displayed menu (14, 17) disappears overtime, and
- the menu (14, 17) displayed in front of the main menu (13) is displayable again if no input of a switching element (13-1 to 13-6) of the main menu 13 has been detected within a second time interval.

7. Operating device (6) according to Claim 6,
**characterized in that**
the input device (4, 7) comprises a touch-sensitive surface (4) which is arranged on the display surface (2) and on which the swiping gesture can be detected.

8. Operating device (6) according to Claim 6 or 7,
**characterized in that**
the input device (4, 7) comprises a detection device (7) with which a gesture executed in a detection region (8) can be detected, wherein the detection region (8) is arranged in front of the display surface (2).

## Revendications

1. Procédé d'utilisation dans un véhicule (20), dans lequel
- un menu (13, 14, 17) d'une structure d'utilisation est affiché sur une surface d'affichage (2) disposée dans le véhicule (20),
- la structure d'utilisation comprenant un menu principal (13) et une pluralité d'autres menus (14, 17) et
- des entrées pouvant être saisies, au travers desquelles une modification du menu (13, 14, 17) affiché peut être provoquée et au travers desquelles des éléments de commutation (13-1 à 13-6, 14-1 à 14-6, 17-1 à 17-6) des menus (13, 14, 17) peuvent être actionnés,
**caractérisé en ce que**
- dans au moins plusieurs menus (14, 17) de la pluralité de menus (13, 14, 17) de la structure d'utilisation, un élément de commutation spécial (16) est affiché sur le bord de la surface d'affichage (2), lequel peut être actionné par un geste de glissement et,
- lorsque le geste de glissement associé à l'élément de commutation spécial (16) a été détecté, le menu principal (13) est affiché,
- le menu principal (13) étant, après la détection de l'actionnement de l'élément de commutation spécial (16), déplacé lors de l'affichage sur la surface d'affichage (2) à partir du bord, dans lequel l'élément de commutation spécial (16) est affiché, durant un premier intervalle de temps de l'affichage, de sorte que le menu principal (13) occupe une zone de la surface d'affichage (2) qui s'agrandit avec le temps et que, simultanément, le menu (14, 17) affiché jusque-là disparaisse avec le temps,
- le menu (14, 17) affiché avant le menu principal (13) étant affiché de nouveau si, dans un deuxième intervalle de temps, aucune entrée d'un élément de commutation (13-1 à 13-6) du menu principal (13) n'a été détectée.

2. Procédé d'utilisation selon la revendication 1,
**caractérisé en ce**
**que** la structure d'utilisation est une structure d'utilisation hiérarchique, dans laquelle le menu principal (13) est ordonné dans le niveau hiérarchique le plus élevé.

3. Procédé d'utilisation selon la revendication 1 ou 2,
**caractérisé en ce**
**que** dans tous les menus (14, 17) de la structure d'utilisation, à l'exception du menu principal (13), l'élément de commutation spécial (16) est affiché sur le bord de la surface d'affichage (2).

4. Procédé d'utilisation selon l'une quelconque des revendications précédentes,
**caractérisé en ce**
**que** l'élément de commutation spécial (16) est affiché dans la même position dans tous les menus (14, 17), à l'exception du menu principal (13).

5. Procédé d'utilisation selon l'une quelconque des revendications précédentes,
**caractérisé en ce**
**que** l'élément de commutation spécial (16) est disposé sur le bord supérieur de la surface d'affichage (2).

6. Dispositif d'utilisation (6) dans un véhicule (20), comprenant
- une surface d'affichage (2),
- une mémoire (11), dans laquelle des données relatives à une structure d'utilisation sont enregistrées, laquelle comprend un menu principal (13) et une pluralité d'autres menus (14, 17),
- un dispositif de commande (3), lequel est couplé à la mémoire (11) et à la surface d'affichage (2) et au moyen duquel des données graphiques pour l'affichage des menus (13, 14, 17) sur la surface d'affichage (2) peuvent être générées et
- un dispositif d'entrée (4, 7), au moyen duquel des entrées peuvent être saisies, au travers desquelles une modification du menu (13, 14, 17) affiché peut être provoquée et au travers desquelles des éléments de commutation (13-1 à 13-6, 14-1 à 14-6, 17-1 à 17-6) des menus (13, 14, 17) peuvent être actionnés,
**caractérisé en ce que**
- les données graphiques pour la représentation des menus (13, 14, 17) de la structure d'utilisation peuvent être générées au moyen du dispositif de commande (3), de sorte que dans au moins plusieurs menus (14, 17) de la pluralité de menus (13, 14, 17) de la structure d'utilisation, un élément de commutation spécial (16) soit affiché sur le bord de la surface d'affichage (2), lequel peut être actionné par un geste de glissement et,
- lorsque le geste de glissement associé à l'élément de commutation spécial (16) a été détecté au moyen du dispositif d'entrée (4, 7), les données graphiques pour la représentation des menus (13, 14, 17) peuvent être générées au moyen du dispositif de commande (3), de sorte que le menu principal (13) soit affiché,
- le menu principal (13) pouvant être, après la détection de l'actionnement de l'élément de commutation spécial (16), déplacé lors de l'affichage sur la surface d'affichage (2) à partir du bord, dans lequel l'élément de commutation spécial (16) peut être affiché, durant un premier intervalle de temps de l'affichage, de sorte que le menu principal (13) occupe une zone de la surface d'affichage (2) qui s'agrandit avec le temps et que, simultanément, le menu (14, 17) affiché jusqu'à présent disparaisse avec le temps et
- le menu (14, 17) affiché avant le menu principal (13) pouvant être affiché de nouveau si, dans un deuxième intervalle de temps, aucune entrée d'un élément de commutation (13-1 à 13-6) du menu principal (13) n'a été détectée.

7. Dispositif d'utilisation (6) selon la revendication 6,
**caractérisé en ce**
**que** le dispositif d'entrée (4, 7) comprend une surface tactile (4), qui est disposée sur la surface d'affichage (2) et sur laquelle le geste de glissement peut être détecté.

8. Dispositif d'utilisation (6) selon la revendication 6 ou 7,
**caractérisé en ce**
**que** le dispositif d'entrée (4, 7) comprend un dispositif de détection (7), au moyen duquel un geste effectué dans une zone de détection (8) peut être détecté, la zone de détection (8) étant disposée devant la surface d'affichage (2).
